# EUROPEAN PATENT SPECIFICATION

(11) **EP 0 904 174 B1**
(45) Date of publication and mention of the grant of the patent: **02.07.2003**
(21) Application number: 97923398.8
(22) Date of filing: 16.01.1997
(51) Int. Cl.: B23K 20/02, B23K 20/00

(54) **METHOD OF BONDING TITANIUM ARTICLES USING A SUPERPLASTIC INTERLAYER**
VERBUNDVERFAHREN FÜR TITANGEGENSTÄNDE UNTER VERWENDUNG EINER SUPERPLASTISCHEN ZWISCHENSCHICHT
PROCEDE POUR JOINDRE DES ARTICLES EN TITANE EN UTILISANT UNE COUCHE INTERMEDIAIRE SUPRAELASTIQUE

(30) Priority: 25.01.1996 UA 96010298
(43) Date of publication of application: 31.03.1999
(73) Proprietor: UNITED TECHNOLOGIES CORPORATION, Hartford, CT 06101 (US); International Center For Paton Institute, Kiev-5, 252005 (UA)
(72) Inventor: MOVCHAN, Boris B., Kiev, 252004 (UA); KORZH, Alexander V., Kiev, 252933 (UA); NEAL, James, W., South Glastonbury, CT 06073 (US); TOPAL, Valery, Kiev, 252098 (UA)
(74) Representative: Leckey, David Herbert
(86) International application number: US9700608
(87) International publication number: WO97027342

(56) References cited:
- EP-A- 0 301 492
- EP-A- 0 761 373
- US-A- 3 713 207
- US-A- 4 514 470
- US-A- 5 429 877

## Description

The invention relates to the solid state bonding of titanium alloy articles to each other and to other metal articles using a superplastic titanium alloy interlayer.

Titanium alloys are widely used in high-performance aerospace applications. Titanium and titanium alloys have historically been regarded as difficult to hot work. The difficulty results first from the high strength, at high temperatures, of the materials and second from the affinity of titanium alloys to absorb undesirable quantities of oxygen which change the chemical composition of the materials and compromise mechanical properties. Recently, methods have been developed to hot work titanium under conditions which produce in the titanium a usable degree of superplasticity. Such forging under superplastic conditions requires the material to be processed at elevated temperatures on the order of 1550°F (843°C)-1650°F (899°C). At such temperatures the titanium materials are extraordinarily susceptible to oxygen absorption and, consequently, such titanium superplastic forging processes must be performed under vacuum or inert conditions. Consequently, although progress has been made in the field of working titanium, there is still room for improvement.

There are also problems which may be solved by producing titanium articles which have different properties in different regions of the article. For example, one portion of an article might require a high fatigue strength while another portion of the article might require a high tensile strength or a superior resistance to fatigue. Such articles can now be produced principally by welding titanium components together. The welding of titanium is a difficult task and it is commonly found that the reduction in mechanical properties in the weld zone is sufficient to make welded construction undesirable. There is therefore an outstanding need for a method to produce titanium articles which have different properties in different portions thereof.

Titanium articles have successfully been bonded together using diffusion bonding. The diffusion bonding process requires heating the articles to an elevated temperature at which the flow stress of the articles being joined is low, so that upon the application of pressure between the surfaces to be bonded local deformation occurs in the bond region thereby promoting interdiffusion and bonding. Such processes are not desirable because they alter the microstructure and the mechanical properties of the titanium because the entire article must be heated to the temperature at which superplasticity is obtained, namely on the order of about 1600°F (871°C). Again, heating the articles to this elevated temperature requires careful attention to vacuum conditions to prevent oxygen absorption. Thus, there remains an outstanding need for a bonding method which can be performed under conditions which will not unduly affect the mechanical properties of the article being bonded. In previously flied international patent application, WO 95/13406, assigned to the present applicant, methods have been described for producing superplastic titanium material using vacuum vapor deposition. The material is unique in that the grain size of the material is sufficiently small such that superplastic behavior is obtained at relatively low temperatures on the order of 1000°F (538°C)-1100°F (593°C). This low temperature permits the superplastic deformation of the ultra-fine grain titanium material at temperatures below which oxygen absorption is a significant problem.

Document US-A-3 713 207 disdoses a foil of superplastic material sandwiched between two surfaces to be joined.

From a first aspect, the present invention provides a method of bonding a titanium article to another metal article at a temperature between about 1000°F (538°C) and about 1500°F (816°C) including steps of:
a. vapor depositing an adherent fine-grain titanium alloy coating on at least one of the faying surfaces of the articles to be bonded, said coating having an alpha-beta microstructure and an average grain size of less, than about 1-3 microns (.001 mm -.003 mm) in at least one plane; and
b. heating the articles to be joined and the coating to between 1000°F (538°C) and 1500°F (816°C) and applying a sufficiently large compressive force to the articles to be joined to cause superplastic deformation of the coating and bonding of the articles to be joined.

From a second aspect, the invention provides a metallic article suited for bonding to a titanium article wherein the metallic article has adhered to its faying surface, a thin coating of vapour deposited fine-grained alpha-beta titanium alloy having an average grain size in at least one plane of less than about 1-3 microns.

Preferably the article is a titanium article.

According to the invention, at least in its preferred embodiments, a thin layer of ultra-fine grain titanium or titanium alloy is interposed between the faying surfaces of articles to be bonded. The interlayer material exhibits superplasticity and the ability to undergo substantial deformation, at temperatures on the order of about 1000°F (538°C) and 1100°F (593°C). These superplastic deformation temperatures are below the temperatures which impair the surface and mechanical properties of the articles to be joined. In addition to the interlayer and the articles to be joined do not absorb significant amounts of oxygen under the conditions at which the interlayer exhibits superplasticity. Consequently, the articles to be joined and the interlayer separating them can be forced together with suitable compressive force to permit the interlayer to accommodate the invariable differences in the surface flatness and surface roughness of the articles to be joined. Plastic deformation is confined to the superplastic interlayer. After bonding is accomplished the bonded article may optionally be briefly heated to an elevated temperature to coarsen any residual fine-grain material found in the interface.

When the interface material composition is properly selected and the grain coarsening step is performed, there will be no discernible difference in composition or microstructure at the bond area and the bonded articles will exhibit-substaritially the properties of the parent articles which were joined.

In one embodiment, the titanium interlayer bonding is formed by condensing titanium alloy vapor on one surface of the articles which are to be joined. In another embodiment, the superplastic material is deposited on all the surfaces to be joined.

It is also within the scope of the invention to bond a titanium article to another alloy of nickel, iron, cobalt, zirconium or a different titanium alloy or an intermetallic of the same.

A preferred characteristic of the interlayer material is that it exhibits superplasticity, meaning that the material must have at least about 300% deformation when tested at a temperature of less than about 1350°F (732°C). We currently know of only one way to obtain such a superplastic interlayer and that is by vacuum vapor deposition onto a cooled substrate.

According to this prior invention, it is possible to produce titanium alloy materials having an average grain size in at least one plane of less than about 1-3 microns (.001 mm-.003 mm). A grain size in the range of about 0.3 microns (.0003 mm) to about 1-3 microns (.001 mm-.003 mm) will produce the desired superplastic interlayer properties. Preferably the grain size is from about .1 micron (.0001 mm to about 3 microns (.003 mm).

Such material can be deposited using vacuum vapor deposition onto a substrate cooled to a temperature of less than about 1300°F (704°C). Preferably the substrate temperature ranges from about 1050°F (566°C) to about 1300°F (704°C) because at temperatures of less than about 1050°F (566°C) a porous deposit is likely to result.

U.S. Patent No.: 5,242,479 illustrates one form of apparatus which can be used to provide the vapor deposited-interlayer material of the appropriate grain size. According to the invention described in this patent, high-rate evaporation of a titanium alloy is performed by melting the titanium alloy to be deposited and causing the molten alloy to flow onto a heated refractory metal surface selected, for example, from the group consisting of tungsten and tantalum. The refractory metal substrate is heated using an electron beam and the titanium alloy forms a molten alloy with the refractory metal. The titanium-refractory metal alloy serves as a source of titanium atoms for vapor deposition. The use of the refractory metal substrate permits the titanium material to be heated to an effectively higher temperature than would otherwise be possible without any significant spattering. The low vapor pressure of the refractory metal effectively keeps it from evaporating. The process is performed under high vacuum conditions less than about 10⁻³ torr (1.33 Pa). The invention illustrated in U.S. Patent No.: 5,242,479 includes an extra source of material for deposition consisting essentially of carbon so that the resultant deposit in the material is a carbide compound. Obviously, the carbon codeposition feature is not employed in the present process.

We have found that we can deposit titanium having the required fine grain size (preferably the grain size is between about .1 microns (.0001 mm) and about 3 microns (.003 mm)) at about 10 microns (.01 mm) per minute to about 100 microns (.1 mm) per minute. Preferably, the interlayer is produced using a vacuum vapor deposition process with substrate temperature control. We prefer to deposit the interlayer material on both of the surfaces which are to be joined together. The reason for this is that these fine-grain titanium interlayers can absorb oxygen which might otherwise contaminate the bond. The fine-grain material can absorb a greater degree of oxygen than the coarse grain substrate because of its higher grain boundary area and more rapid diffusion. By coating both the surfaces to be bonded, we believe that the chances for an oxide contaminated bond will be reduced. Of course, as previously stated, it is possible to apply the superplastic titanium material to only one of the surfaces to be bonded or even to provide it as a separate interlayer sheet.

The thickness of the interlayer required depends largely upon the conditions of the surfaces to be joined. In general, rougher surfaces will require a thicker interlayer than smoother surfaces to ensure that there is enough volume of material to fill any voids. For bonding together two planar surfaces having extremely good surface finishes, flatness and smoothness on the order of those required for optical components could be accomplished with a total interlayer thickness on the order of as little as 1,000 angstroms (100 nanometres). In practice, for commercial applications it will be found necessary to employ total interlayer thickness of preferably at least about 20 microns (.02 mm) and most preferably at least about 10 microns (.01 mm). There is no particular upper limit for interlayer thickness, however, if the interlayer chemistry differs substantially from that of the articles to be bonded and if it desired to achieve interlayer chemistry homogeneity by way of diffusion, it will be appreciated that it will be desirable to employ the minimal total interlayer thickness which will permit full surface contact between the articles to be joined.

In addition to grain size, it is highly desired that the titanium alloy interlayer material consists of a mixture of the alpha and beta phases. The alpha phase is desirable because it has a high oxygen diffusivity. This means that oxygen contamination at the bonding surface can be absorbed through diffusion into the alpha phase. However; the beta phase has a considerably higher degree of superplasticity than the alpha phase under equivalent conditions. Consequently, it is desired to have a substantial amount of beta phase present to maximize the superplastic effect.

Preferably, the alpha-beta ratio ranges from 5:95 to 95:10, more preferably from 20:80 to 80:20, and most preferably from 30:70 to 70:30 by volume percent.

The process is performed as follows: The article surfaces to be joined are provided with the appropriate geometry in terms of flatness and roughness. The surfaces to be joined are cleaned using chemical or physical means or a mixture or combination thereof. Chemical means include acid baths, for example, while physical means include mechanical abrasion. Immediately after such chemical and physical cleaning steps, the articles are preferably preserved under conditions of low oxygen and low moisture to minimize the formation of surface oxides of detrimental thickness. The superplastic interlayer is deposited on one or both of the surfaces to be joined. Such deposition is performed under conditions of high vacuum (i.e., less than 10⁻³ torr (1.33 Pa)). It may be found desirable to perform further cleaning step after the pieces are in the vacuum chamber, but prior to the deposition of the superplastic interlayer. Cleaning under high vacuum conditions may be performed by either using the sputtering process to remove any layers of surface contamination and/or by using a process known as reverse transferred arc. Thereafter, the superplastic interlayer is deposited by vacuum vapor deposition. Preferably the substrate interlayer grain substrate temperatures are maintained from 1050°F (566°C) to about 1300°F (704°C) and a deposition rate of from 1 µm/min to about 100 µm/min is employed. This will give an interlayer grain size from about 0.3 µm to about 3µm and a time to produce a 10µm interlayer of about 0.1 minutes to about 10 minutes. As previously mentioned, we prefer to use a heated substrate to evaporate the molten titanium as described for example in U.S. Patent No.: 5,242,479. When the interlayer thickness reaches the necessary thickness the parts are ready for bonding.

Bonding may be performed in air, but more consistently favorable results may be obtained through bonding under vacuum conditions to minimize surface contamination. Bonding may be performed in a temperature range from about 1000°F (538°C) to about 1400°F (760°C) with an applied stress of about 2000 newtons per centimeter squared. The time required will be on the order from about 20 minutes to about 60 minutes. At the conclusion of the bonding process, the bond may be heated from about 1500°F (816°C) to about 1700°F (927°C) to cause coarsening of the microstructure in the interlayer and diffusional homogenization.

Although the invention has been described with respect to detailed embodiments thereof, it will be understood by those skilled in the art that various changes in form and detail thereof may be made without departing from the scope of the claimed invention as defined in the appended claims.

## Claims

1. A method of bonding a titanium article to another metal article at a temperature between about 1000°F (538°C) and about 1500°F (816°C) including steps of
a. vapor depositing an adherent fine-grain titanium alloy coating on at least one of the faying surfaces of the articles to be bonded, said coating having an alpha-beta microstructure and an average grain size of less than about 1-3 microns (.001 mm - .003 mm) in at least one plane; and
b. heating the articles to be joined and the coating to between 1000°F (538°C) and 1500°F (816°C) and applying a sufficiently large compressive force to the articles to be joined to cause superplastic deformation of the coating and bonding of the articles to be joined.

2. A method as in claim 1 wherein the coating has a thickness of about 0.5 mils (.013 mm) to 2 mils (.051 mm).

3. A method as in claim 2 wherein the coating is provided on both of the faying surfaces, each of said coatings having a thickness of at least .5 mils (.013 mm).

4. A method as in claim 1,2 or 3 wherein the bonding is performed in air.

5. A method as in any preceding claim wherein both of the articles to be joined are titanium alloy articles.

6. A method as in claim 1 wherein the coating is at least 10 microns (.01 mm) thick.

7. A method as in any preceding claim wherein the coating contains from 80:20 to 20:80 by volume of the alpha and beta phases.

8. A method as in claim 7 wherein the coating contains from 70:30 to 30:70 by volume of the alpha and beta phases.

9. A metallic article suited for bonding to a titanium article wherein the metallic article has, adhered to its faying surface, a thin coating of vapour deposited fine-grained alpha-beta titanium alloy having an average grain size in at least one plane of less than about 1-3 microns.

10. A metallic article as claimed in claim 9, wherein said metallic article is a titanium article.

11. An article as in claim 9 or 10 wherein the fine grained alpha-beta titanium coating has a thickness of 10-15 microns.

12. An article as in claim 11 wherein the coating contains from 80:20 to 20:80 by volume of the alpha and beta phases.

## Patentansprüche

1. Verfahren zum Verbinden eines Titan-Gegenstands mit einem anderen Metall-Gegenstand bei einer Temperatur zwischen etwa 1000 °F (538 °C) und etwa 1500 °F (816 °C), folgende Schritte aufweisend:
a) Aufbringen durch Dampfabscheidung einer anhaftenden Beschichtung aus feinkörniger Titanlegierung auf mindestens eine der Kontaktflächen der zu verbindenden Gegenstände, wobei die Beschichtung eine alpha-beta-Mikrostruktur und eine mittlere Korngröße von weniger als etwa 1 bis 3 µm (0,001 mm bis 0,003 mm) in mindestens einer Ebene hat; und
b) Erhitzen der zusammenzufügenden Gegenstände und der Beschichtung auf zwischen 1000 °F (538 °C) und 1500 °F (816 °C) und Ausüben einer ausreichend großen Druckkraft auf die zusammenzufügenden Gegenstände, um eine superplastische Verformung der Beschichtung und ein Verbinden der zusammenzufügenden Gegenstände zu bewirken.

2. Verfahren nach Anspruch 1, bei dem die Beschichtung eine Dicke von etwa 0,5 mils (0,013 mm) bis 2 mils (0,051 mm) hat.

3. Verfahren nach Anspruch 2, bei dem die Beschichtung an beiden Kontaktflächen vorgesehen wird, wobei jede der Beschichtungen eine Dicke von mindestens 0,5 mils (0,013 mm) hat.

4. Verfahren nach Anspruch 1, 2 oder 3, bei dem das Verbinden in Luft durchgeführt wird.

5. Verfahren nach einem der vorangehenden Ansprüche, bei dem beide zusammenzufügenden Gegenstände Gegenstände aus Titanlegierung sind.

6. Verfahren nach Anspruch 1, bei dem die Beschichtung mindestens 10 µm (0,01 mm) dick ist.

7. Verfahren nach einem der vorangehenden Ansprüche, bei dem die Beschichtung volumenmäßig von 80:20 bis 20:80 alpha- und beta-Phase enthält.

8. Verfahren nach Anspruch 7, bei dem die Beschichtung volumenmäßig von 70:30 bis 30:70 alpha- und beta-Phase enthält.

9. Metallischer Gegenstand, der zur Verbindung mit einem Titan-Gegenstand geeignet ist, wobei der metallische Gegenstand eine dünne Beschichtung aus durch Dampfabscheidung aufgebrachter feinkörniger alpha- beta-Titanlegierung mit einer mittleren Korngröße in mindestens einer Ebene von weniger als etwa 1 bis 3 µm hat, die an seiner Kontaktfläche anhaftet.

10. Metallischer Gegenstand nach Anspruch 9, wobei der metallische Gegenstand ein Titan-Gegenstand ist.

11. Gegenstand nach Anspruch 9 oder 10, wobei die feinkörnige alpha-beta-Titan-Beschichtung eine Dicke von 10 bis 15 µm hat.

12. Gegenstand nach Anspruch 11, wobei die Beschichtung volumenmäßig von 80:20 bis 20:80 alpha- und beta-Phase enthält.

## Revendications

1. Procédé pour rendre solidaire un objet en titane et un objet en un autre métal à une température comprise entre environ 1000°F (538°C) et environ 1500°F (816°C), qui comprend les étapes consistant :
a. à déposer en phase vapeur un revêtement en un alliage de titane adhérent à grains fins sur au moins l'une des surfaces de contact des objets devant être solidarisés, ledit revêtement ayant une microstructure alpha-bêta et une grosseur moyenne des grains inférieure à environ 1-3 micromètres (0,001 mm - 0,003 mm) dans au moins un plan ; et
b. à chauffer les objets devant être assemblés et le revêtement à une température comprise entre 1000°F (538°C) et 1500°F (816°C) et à appliquer une force de compression suffisamment grande, aux objets devant être assemblés, pour provoquer une déformation superplastique du revêtement et une solidarisation des objets devant être assemblés.

2. Procédé selon la revendication 1, dans lequel le revêtement a une épaisseur d'environ 0,5 mils (0,013 mm) à 2 mils (0,051 mm).

3. Procédé selon la revendication 2, dans lequel le revêtement est disposé sur les deux surfaces de contact, chacun desdits revêtements ayant une épaisseur d'au moins 0,5 mils (0,013 mm).

4. Procédé selon la revendication 1, 2 ou 3, dans lequel la solidarisation est effectuée dans l'air.

5. Procédé selon l'une quelconque des revendications précédentes, dans lequel les deux objets devant être assemblés sont des objets en un alliage de titane.

6. Procédé selon la revendication 1, dans lequel le revêtement a une épaisseur d'au moins 10 micromètres (0,01 mm).

7. Procédé selon l'une quelconque des revendications précédentes, dans lequel le revêtement contient de 80:20 à 20:80 en volume des phases alpha et bêta.

8. Procédé selon la revendication 7, dans lequel le revêtement contient de 70:30 à 30:70 en volume des phases alpha et bêta.

9. Objet métallique convenant à une solidarisation avec un objet en titane, dans lequel l'objet métallique porte, adhérent à sa surface de contact, un revêtement mince d'un alliage de titane alpha-bêta déposé en phase vapeur et à grains fins, ayant une grosseur moyenne des grains dans au moins un plan inférieure à environ 1-3 micromètres.

10. Objet métallique selon la revendication 9, où ledit objet métallique est un objet en titane.

11. Objet selon la revendication 9 ou 10, dans lequel le revêtement de titane alpha-bêta à grains fins a une épaisseur de 10-15 micromètres.

12. Objet selon la revendication 11, dans lequel le revêtement contient de 80:20 à 20:80 en volume des phases alpha et bêta.
